# EUROPÄISCHE PATENTSCHRIFT

(11) **EP 1 977 943 B1**
(45) Veröffentlichungstag und Bekanntmachung des Hinweises auf die Patenterteilung: **11.09.2013**
(21) Anmeldenummer: 08002704.8
(22) Anmeldetag: 14.02.2008
(51) Int. Cl.: B60T 8/32, B62L 3/00

(54) **Blockiergeschützte, hydraulische Bremsanlage, insbesondere für motorisierte Zweiräder**
Hydraulic anti-lock braking system, in particular for motorcycles
Système de freinage hydraulique à antiblocage, en particulier pour motos

(30) Priorität: 05.04.2007 DE 102007016948
(43) Veröffentlichungstag der Anmeldung: 08.10.2008
(73) Patentinhaber: FTE automotive GmbH, 96106 Ebern (DE)
(72) Erfinder: Drescher, Walter, 96106 Ebern (DE)
(74) Vertreter: Oppermann, Mark

(56) Entgegenhaltungen:
- EP-A1- 0 253 157
- WO-A1-94/07719
- WO-A1-97/04999
- DE-A1- 3 631 442
- DE-A1- 4 004 316
- DE-A1- 4 028 552
- JP-A- 60 025 835
- JP-A- 61 113 545
- US-A- 4 099 793

## Beschreibung

### TECHNISCHES GEBIET

Die Erfindung betrifft eine blockiergeschützte hydraulische Bremsanlage entsprechend dem Oberbegriff des Patentanspruchs 1. Insbesondere bezieht sich die Erfindung auf eine blockiergeschützte hydraulische Bremsanlage für motorisierte Zweiräder, wie sie in jüngerer Zeit von Verkehrsexperten aus Sicherheitsgründen generell für motorisierte Zweiräder gefordert wird.

Ein Blockierschutz, allgemein auch als Antiblockiersystem (ABS) bezeichnet, bewirkt prinzipiell, daß, wenn während eines Bremsvorgangs mit am Radbremszylinder anstehendem Bremsdruck eine bestimmte Verzögerungsschwelle an dem gebremsten Rad überschritten wird, so daß das Rad zu blockieren droht, der Radbremsdruck soweit verringert wird, bis eine zweite Verzögerungsschwelle an diesem Rad unterschritten wird. Hierfür kann es notwendig sein, den anstehenden Radbremsdruck bis auf Null abzubauen. Danach wird der Radbremsdruck wieder erhöht, bis entweder das Rad erneut überbremst oder der vom Fahrer vorgegebene Bremsdruck erzielt wird.

### STAND DER TECHNIK

Im Stand der Technik fehlt es nicht an Vorschlägen, wie die vorbeschriebene Bremsdruckmodulation bewirkt werden kann. So offenbart z.B. die gattungsbildende DE 40 10 841 A1 eine blockiergeschützte hydraulische Bremsanlage, die einen Radbremskreis und einen Hilfsdruckkreis umfaßt. Der Radbremskreis weist einen Hauptzylinder, eine Radbremse und ein dazwischenliegendes Einlaßventil auf. Der Hilfsdruckkreis ist zwischen dem Einlaßventil und der Radbremse parallel an den Radbremskreis angeschlossen. Hierbei unterteilt eine Hilfsdruckpumpe den Hilfsdruckkreis in eine pumpeneingangsseitige Rücklaufleitung und eine pumpenausgangsseitige Hilfsdruckleitung. In der Rücklaufleitung sind ein elektromagnetisch betätigbares, in seiner Grundposition stromlos geschlossenes Auslaßventil und ein als Niederdruckspeicher wirkender Druckmittelspeicher in Strömungsrichtung hintereinander angeordnet, während in der Hilfsdruckleitung eine Drossel vorgesehen ist.

Bei einer ABS-Regelung ist das Einlaßventil vermittels des vor der Drossel in der Hilfsdruckleitung anstehenden Hilfsdrucks von einer geöffneten Grundstellung in eine Schaltstellung schaltbar, in der es die hydraulische Verbindung zwischen dem Hauptzylinder und der Radbremse unterbricht. Der an der Radbremse anstehende Bremsdruck kann dann bei laufender Hilfsdruckpumpe durch das Zusammenwirken der Drossel in der Hilfsdruckleitung mit einer "Phasensteuerung" des Auslaßventils in der Rücklaufleitung geeignet moduliert werden.

Wenngleich die vorbeschriebene Bremsanlage aufgrund insbesondere der Sperrwirkung des Einlaßventils im ABS-Regelungsfall vorteilhaft rückwirkungsfrei ist, d.h. die durch die Schaltvorgänge des Auslaßventils verursachten ABS-Druckregelungsstöße werden nicht auf den Hauptzylinder und damit das Bremspedal übertragen, wird ein Nachteil dieses Stands der Technik darin gesehen, daß hier ein verhältnismäßig hoher vorrichtungstechnischer Aufwand betrieben wird, was dem Einsatz einer solchen Bremsanlage insbesondere in preisgünstigen Zweirädern entgegensteht.

Ferner ist aus der DE 40 39 088 A1 eine blockiergeschützte, hydraulische Bremsanlage nach dem Rückförderprinzip bekannt, bei der eine Volumenausgleichseinrichtung in Form eines Niederdruckspeichers hydraulisch an einen Leitungsabschnitt zwischen einer Hydraulikpumpe und einer Drosseleinrichtung angeschlossen ist.

Des Weiteren offenbart die DE 196 44 883 A1 eine Fahrzeugbremsanlage mit einer Antriebsschlupf- und/oder Fahrdynamikregeleinrichtung, bei der wenigstens zwei Hydraulikpumpen mittels eines drehzahlsteuerbaren Elektromotors angetrieben werden, wobei durch Drehzahländerung des Elektromotors der durch die Hydraulikpumpen abgegebene Volumenstrom veränderbar ist. Auch bei diesem Stand der Technik ist eine Volumenausgleichseinrichtung vorgesehen, die stromabwärts von den Hydraulikpumpen vor einer Drossel angeordnet ist und die Funktion hat, als Teil einer aus Drossel und Pufferkammer bestehenden Pulsations-Minderungseinrichtung die von den Hydraulikpumpen ausgehenden Druckschwankungen auszugleichen.

In der JP 61 113545 A wird eine der Bremsanlage gemäß der den Oberbegriff des Patentanspruchs 1 bildenden DE 40 10 841 A1 ähnliche Bremsanlage offenbart, bei der, wenn das Bremsbetätigungselement (Bremshebel) nach einer Bremsung entlastet wird, ein druckgesteuertes Schaltventil durch die Druckreduktion auf der Geberzylinderseite in eine Verbindungsposition geschaltet wird. Im Ergebnis wird das Druckmittel vom Radzylinder zum Geberzylinder zurückgeführt, ohne einen Restdruck zu erzeugen, und die Bremse ist vollständig gelöst. Auch dieser Stand der Technik weist ein elektromagnetisch ansteuerbares Auslassventil auf, das mit dem Radzylinder hydraulisch verbunden ist.

Die DE 40 04 316 A1 offenbart eine hydraulische Fahrzeugbremsanlage mit einem Hauptbremszylinder, wenigstens einer Radbremse und wenigstens einer dazwischen eingebauten Blockierschutzeinrichtung, welche wenigstens eine elektromagnetisch ansteuerbare Blockierschutzventilanordnung aufweist, die mit dem Hauptbremszylinder und mit der Radbremse sowie einem Eingang einer Rückförderpumpe verbunden ist, deren Ausgang eine Dämpferkammer mit vergrößerter Druckmittelaufnahmefähigkeit und eine Dämpferdrossel nachgeordnet sind, wobei die Dämpferdrossel mit der Blockierschutzventilanordnung kommuniziert. Bei diesem Stand der Technik ist zwischen dem Hauptbremszylinder und einer Kombination aus der Dämpferdrossel und der Blockierschutzventilanordnung ein im Blockierschutzbetrieb gesteuert zumindest teilweise schließbares Ventil eingebaut, welches dazu dient, während des Blockierschutzbetriebs Rückwirkungen auf den Hauptbremszylinder zu vermindern, so dass das Bremspedal weniger verschoben wird. Bei Radblockiergefahr wird der Bremsdruck in der Radbremse abgesenkt indem ein Steuergerät die Blockierschutzventilanordnung elektromagnetisch ansteuert.

Ferner wird in der DE 40 28 552 A1 eine Anlage zur Bremsschlupf- und Antriebsschlupfregelung vorgestellt, mit einem Hauptbremszylinder, einem Druckmittelvorratsbehälter, der bei nicht betätigtem Hauptbremszylinder mit den Arbeitskammern desselben druckmittelverbunden ist, einem Radbremsen umfassenden Bremskreis, wobei die Radbremsen über eine Bremsleitung mit dem Hauptbremszylinder und über eine Druckleitung mit dem Ausgang einer Pumpe verbunden sind, deren Eingang über eine Rücklaufleitung mit den Radbremsen verbunden ist, sowie elektromagnetisch ansteuerbaren Modulationsventilen (Auslassventilen) zum Regeln des Radbremsdrucks in Abhängigkeit vom Drehverhalten der Räder. Bei diesem Stand der Technik werden im Falle einer Antriebsschlupfregelung die Verbindungen von der Radbremse des angetriebenen Rads zum Hauptbremszylinder und zur Druckseite der Pumpe über Trennventile durchgeschaltet, so dass eine Druckmittelverbindung zwischen dem Vorratsbehälter und der Saugseite der Pumpe entsteht. Über diesen Weg saugt die Pumpe Druckmittel an und fördert es zum angetriebenen Rad. Der Bremsschlupfmodus beinhaltet, dass der Pumpenantrieb eingeschaltet und die Trennventile umgeschaltet werden, wodurch der Hauptbremszylinder hydraulisch gesperrt ist und die Radbremsen voneinander getrennt sind. Zur Drucksenkung in den Radbremsen werden die Auslassventile sodann nach einem bestimmten Algorithmus elektromagnetisch angesteuert.

Weiterhin wird in der DE 36 31 442 A1 eine Antiblockiervorrichtung für hydraulisch betätigte Kraftfahrzeugbremsen mit mindestens einem Hauptzylinder, einem Radzylinder, einer Steuer- und Regelelektronik mit dazugehörendem Sensor, einer Pumpe und einem elektromagnetisch ansteuerbaren Mehrwegeventil vorgeschlagen, wobei die Pumpe und das Mehrwegeventil zwischen dem Hauptzylinder und dem Radzylinder angeordnet sind. In diesem Stand der Technik ist die Pumpe bei Druckaufbau im Radzylinder eingeschaltet und fördert Druckmittel im Kreislauf, wobei das Mehrwegeventil den Durchlauf von Hauptzylinder und Pumpe zum Radzylinder ermöglicht. Wird bei weiterer Druckerhöhung im Radzylinder von der Regelelektronik eine Blockiergefahr gemeldet, so sperrt das Mehrwegeventil die vom Hauptzylinder kommende Leitung ab, worauf nur noch der von der Pumpe kommende Druck am Radzylinder wirkt. Meldet die Regelelektronik dann eine bestehende Blockiergefahr, so schaltet das Mehrwegeventil um und die Pumpe pumpt Druckmittel aus dem Radzylinder zum Hauptzylinder.

Schließlich offenbart die WO 97/04999 A1 eine hydraulische Kraftfahrzeugbremsanlage mit Radschlupfregelung, umfassend einen Bremsdruckgeber, der mit wenigstens einem Paar Radbremsen hydraulisch in Verbindung steht, elektromagnetisch ansteuerbaren Druckmodulationsventilen zwischen dem Bremsdruckgeber und den Radbremsen, und einer Pumpe, die mit ihrer Saugseite mit den Radbremsen und mit ihrer Druckseite mit dem Bremsdruckgeber verbindbar ist. An der Druckseite der Pumpe ist wenigstens ein mit einem Druckmittelspeicher zusammenwirkendes Ventilmittel (Sperrventil, Rückschlagventil, Druckrückhalteventil) angeordnet, und die Saugseite der Pumpe ist unmittelbar an wenigstens einer den Radbremsen zugeordneten Rücklaufleitung angeschlossen. Wie bei den vier vorbeschriebenen Bremsanlagen wird auch in diesem Stand der Technik im ABS-Regelungsfall ein Druckabbau an den Radbremsen unter geeigneter Taktung der Druckmodulationsventile erzielt. Während bei den vier vorbeschriebenen Bremsanlagen die Pumpe lediglich ein- bzw. ausgeschaltet wird, wird in diesem Stand der Technik die Möglichkeit angesprochen, zwecks raschem Druckabbau in der blockiergefährdeten Radbremse eine Einstellung der Pumpendrehzahl und damit die Einstellung des erforderlichen Fördervolumens in Abhängigkeit von der Radbremse mit dem größten erforderlichen Druckabbaugradienten vorzusehen, so dass der Druckmittelspeicher nicht zwingend erforderlich ist.

### AUFGABENSTELLUNG

Der Erfindung liegt die Aufgabe zugrunde, eine verglichen zum gattungsbildenden Stand der Technik einfacher und kostengünstiger ausgebildete, blockiergeschützte hydraulische Bremsanlage, insbesondere für motorisierte Zweiräder, zu schaffen, die im ABS-Regelungsfall im Wesentlichen frei von störenden Rückwirkungen auf den Hauptbremszylinder ist.

### DARSTELLUNG DER ERFINDUNG

Die obige Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 10.

Erfindungsgemäß ist bei einer blockiergeschützten, hydraulischen Bremsanlage, insbesondere für motorisierte Zweiräder, mit
einem Radbremskreis, der einen Hauptbremszylinder, mindestens einen Radbremszylinder und ein Schaltventil aufweist, und
einem zwischen dem Schaltventil und dem Radbremszylinder an dem Radbremskreis parallel angeschlossenen Hilfsdruckkreis, der eine Hydraulikpumpe zur Erzeugung eines Volumenstroms, eine bezüglich der Hydraulikpumpe stromabwärts gelegene Drosseleinrichtung sowie eine Volumenausgleichseinrichtung umfasst,
wobei das Schaltventil für eine bremsschlupfgeregelte Betriebsphase der Bremsanlage von einer Grundstellung, in der es den Hauptbremszylinder und den Radbremszylinder hydraulisch verbindet, in eine Schaltstellung schaltbar ist, in welcher es am Radbremszylinder einen Bremsdruckaufbau über den Hauptbremszylinder verhindert, während der Bremsdruck am Radbremszylinder vermittels des Hilfsdruckkreises modulierbar ist;
die Volumenausgleichseinrichtung zwischen der Hydraulikpumpe und der Drosseleinrichtung an dem Hilfsdruckkreis angeschlossen, wobei der durch die Hydraulikpumpe erzeugte Volumenstrom veränderbar ist, so dass durch definierte Änderung der Förderleistung der in der bremsschlupfgeregelten Betriebsphase kontinuierlich betriebenen Hydraulikpumpe dem Radbremskreis in definierter Weise Hydraulikflüssigkeit entziehbar und somit der Bremsdruck in der bremsschlupfgeregelten Betriebsphase gänzlich ohne elektromagnetisch betätigbare Schaltventile modulierbar ist.

Die derart aufgebaute hydraulische Bremsanlage zeichnet sich zunächst dadurch aus, dass sie gänzlich ohne elektromagnetisch betätigbare Schaltventile für die Druckmodulation in der bremsschlupfgeregelten Betriebsphase auskommt, was verglichen mit dem gattungsbildenden Stand der Technik nicht nur die Kosten der Bremsanlage insgesamt verringert, sondern auch die Baugröße sowie das Gewicht des eigentlichen Druckmodulators vorteilhaft reduziert, wodurch sich die erfindungsgemäße hydraulische Bremsanlage insbesondere für den Einsatz an kleineren oder leistungsschwächeren motorisierten Zweirädern, etwa an Motorrollern empfiehlt.

Statt des Einsatzes elektromagnetisch betätigbarer Schaltventile wird für die Druckmodulation in der bremsschlupfgeregelten Betriebsphase der erfindungsgemäßen hydraulischen Bremsanlage die Dynamik der Hydraulikpumpe ausgenutzt, indem durch definierte Änderung der Förderleistung der Hydraulikpumpe dem Radbremskreis mehr oder weniger Volumen an Hydraulikflüssigkeit entzogen wird, wobei die Hydraulikpumpe zugleich die Volumenausgleichseinrichtung mit dem dem Radbremskreis entzogenen Hydraulikflüssigkeitsvolumen, welches sich vor der Drosseleinrichtung "staut", "aufladen" kann. Dabei kann mit einer im Verhältnis hohen Förderleistung der Hydraulikpumpe dem Radbremskreis ein größeres Hydraulikflüssigkeitsvolumen entzogen werden, was zu einem stärkeren Druckabbau im Radbremskreis führt, während mit einer im Verhältnis geringen Förderleistung der Hydraulikpumpe dem Radbremskreis ein kleineres Hydraulikflüssigkeitsvolumen entzogen werden kann, was zu einem schwächeren Druckabbau im Radbremskreis führt. Für einen Druckaufbau im Radbremskreis ist lediglich die Förderleistung der Hydraulikpumpe soweit zu reduzieren, daß im Leitungsabschnitt zwischen der Hydraulikpumpe und der Drosseleinrichtung der hydraulische Druck soweit sinkt, daß die Volumenausgleichseinrichtung das dem Radbremskreis entzogene Hydraulikflüssigkeitsvolumen wenigstens teilweise wieder abgibt, welches sodann zeitverzögert über die Drosseleinrichtung in den Radbremskreis zurückgelangt.

Mit anderen Worten gesagt übernimmt die Hydraulikpumpe erfindungsgemäß zwei Funktionen: Zum einen fördert sie in definierter Weise ein Hydraulikflüssigkeitsvolumen aus dem Radbremskreis hinaus, welches aufgrund der Drosseleinrichtung nicht gleichermaßen in den Radbremskreis zurückgelangen kann; zum anderen erzeugt sie vor der Drosseleinrichtung einen Staudruck, infolge dessen die Volumenausgleichseinrichtung ein Hydraulikflüssigkeitsvolumen aufnimmt, d.h. für eine spätere bzw. zeitverzögerte Abgabe bei deutlich reduzierter Förderleistung der Hydraulikpumpe speichert. Dies alles setzt natürlich voraus, daß der durch die Hydraulikpumpe erzeugte Volumenstrom bzw. deren Förderleistung hinsichtlich Feinfühligkeit und Zeitnähe geeignet veränderbar ist, so daß durch entsprechende Ansteuerung der Hydraulikpumpe im Zusammenwirken mit der Drosseleinrichtung und der Volumenausgleichseinrichtung der hydraulische Druck im Radbremskreis wie beschrieben definiert abgebaut, gehalten bzw. aufgebaut werden kann. Der eigentliche ABS-Regelalgorithmus, mit vorbestimmten Druckaufbau-, Druckhalte- und Druckabbauphasen braucht sich nicht von herkömmlichen ABS-Regelalgorithmen zu unterscheiden; allerdings wird die Druckmodulation auf andere, gegenüber dem Stand der Technik vorrichtungstechnisch vereinfachte Weise bewirkt.

Da keine elektromagnetisch betätigbaren Schaltventile eingesetzt werden, vielmehr die Hydraulikpumpe in der bremsschlupfgeregelten Betriebsphase der erfindungsgemäßen hydraulischen Bremsanlage kontinuierlich -- wenn auch mit variierender Volumenstromabgabe -- betrieben werden kann, entstehen auch keine Druckregelungsstöße, die auf den Hauptbremszylinder zurückwirken könnten, so daß die erfindungsgemäße Bremsanlage im wesentlichen rückwirkungsfrei ist.

Vorzugsweise handelt es sich bei der Volumenaufnahmeeinrichtung um einen Federdruckspeicher. Diese Speicher besitzen eine über die Federkraft einfach einstellbare Charakteristik und sind als Massenteil im Handel leicht und kostengünstig erhältlich.

Es ist weiterhin bevorzugt, als Drosseleinrichtung eine Festblende einzusetzen, deren Charakteristik im Gegensatz zu der Charakteristik einer Festdrossel infolge der nur kurzen Durchflußlänge der Festblende im wesentlichen unabhängig von der Viskosität und damit der Temperatur des Hydraulikmediums ist.

Wenngleich es prinzipiell verschiedene Möglichkeiten gibt, das Fördervolumen der Hydraulikpumpe zu verändern, ist es insbesondere aus Kostengründen und im Hinblick auf eine einfache Steuerung bevorzugt, die Hydraulikpumpe mittels eines Elektromotors anzutreiben, dessen Drehzahl zur Veränderung des von der Hydraulikpumpe erzeugten Volumenstroms steuerbar ist. Bei der Hydraulikpumpe kann es sich hierbei grundsätzlich um jede motorisch antreibbare Ölpumpe, z.B. eine Zahnradpumpe handeln. Im Hinblick auf hohe Druckfestigkeit, geringe Kosten und kleine Baugröße bevorzugt ist jedoch der Einsatz einer Rollenzellenpumpe (*roller-cell-pump*). Bei dem Elektromotor zum Antrieb der Pumpe handelt es sich vorzugsweise um einen bürstenlosen Gleichstrommotor (*brushless dc motor*), der sich durch eine hervorragende Dynamik, einen hohen Wirkungsgrad bzw. eine hohe Leistungsdichte, einen geringen Verschleiß und damit eine lange Lebensdauer, eine gute Überlastfähigkeit, ein geringes Gewicht und nicht zuletzt eine geringe Geräuschentwicklung auszeichnet.

Was das vorzugsweise hydraulische Schaltsignal für das Schaltventil angeht, kann dieses zwischen dem Hauptbremszylinder und dem Schaltventil am Radbremskreis abgegriffen werden, vermittels einer dort angeschlossenen hydraulischen Steuerleitung, die zu einem Steueranschluß des Schaltventils führt. Bevorzugt ist jedoch eine Ausgestaltung, bei der das Schaltventil in Abhängigkeit von dem zwischen der Hydraulikpumpe und der Drosseleinrichtung im Hilfsdruckkreis herrschenden Druck von seiner Grundstellung in seine Schaltstellung schaltbar ist, vermittels einer hydraulischen Steuerleitung oder einem hydraulischen Steuerkanal, die/der zwischen Hydraulikpumpe und Drosseleinrichtung an den Hilfsdruckkreis angeschlossen ist und zu dem Steueranschluß des Schaltventils führt. In diesem Fall wird das Schaltventil vorteilhaft nur dann von seiner Grundstellung in seine Schaltstellung geschaltet, wenn die Hydraulikpumpe korrekt arbeitet.

Grundsätzlich ist es möglich, das Schaltventil -- wie im gattungsbildenden Stand der Technik -- derart auszubilden, daß es in seiner Schaltstellung die Verbindung zwischen Hauptbremszylinder und Radbremszylinder in beiden möglichen Strömungsrichtungen unterbricht, d.h. sperrt. Bevorzugt ist es jedoch, wenn das Schaltventil derart ausgestaltet ist, daß es in seiner Schaltstellung als Rückschlagventil wirkt, welches am Radbremszylinder einen Bremsdruckabbau über den Hauptbremszylinder gestattet. Einerseits verhindert das derartige in seine Schaltstellung geschaltete Schaltventil also, daß im ABS-Regelungsfall über den Hauptbremszylinder ein Mehr an Druck in den Radbremskreis zugesteuert werden kann. Andererseits ermöglicht das derartige in seine Schaltstellung geschaltete Schaltventil jedoch die Berücksichtigung eines Fahrerwunsches "Druckabbau", d.h. nimmt der Fahrer im ABS-Regelungsfall am Hauptbremszylinder die Betätigungskraft zurück, öffnet das sich in seiner Schaltstellung befindende Schaltventil und es kommt zu einer Druckentlastung im Radbremskreisabschnitt zwischen Schaltventil und Radbremszylinder.

Des weiteren kann ein Drucksensor vorgesehen sein, mittels dessen der Bremsdruck im Radbremskreis erfaßbar ist. Zum einen kann durch eine solche Druckerfassung die Regelqualität verbessert werden. Zum anderen kann so auf einfache Weise verhindert werden, daß infolge der Saugwirkung der Hydraulikpumpe am Radbremszylinder ein Unterdruck erzeugt wird.

Vorteilhaft können schließlich zumindest das Schaltventil, die Hydraulikpumpe, die Drosseleinrichtung und die Volumenausgleichseinrichtung als Druckmodulator zu einem Block zusammengefaßt sein. Ein solcher Druckmodulator kann als vormontiertes, funktionsgeprüftes und ggf. mit Hydraulikflüssigkeit vorbefülltes Aggregat für eine unkomplizierte Montage beim Kraftfahrzeug-Hersteller bereitgestellt werden.

### KURZE BESCHREIBUNG DER ZEICHNUNGEN

Im folgenden wird die Erfindung anhand bevorzugter Ausführungsbeispiele unter Bezugnahme auf die beigefügten schematischen Zeichnungen näher erläutert. In den Zeichnungen zeigen:

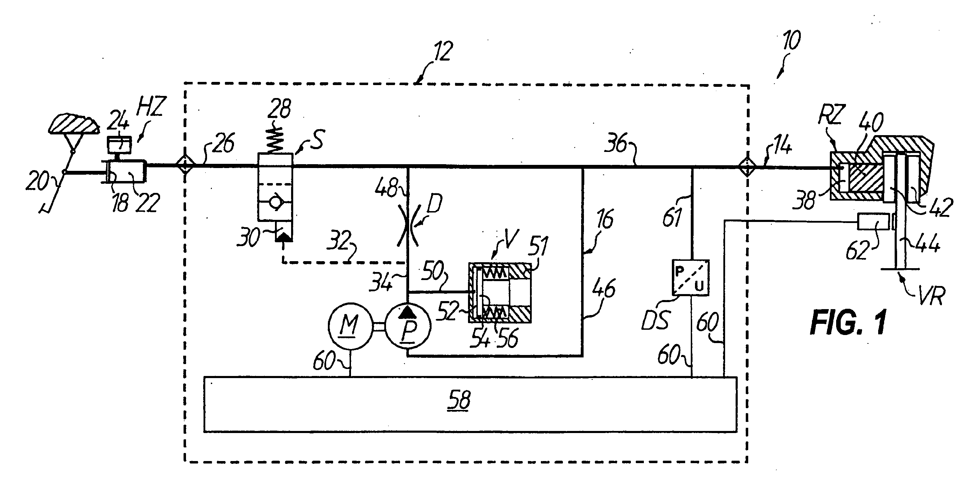

- Fig. 1: ein Schaltbild einer blockiergeschützten, hydraulischen Bremsanlage für ein motorisiertes Zweirad nach einem ersten Ausführungsbeispiel der Erfindung (1-Kanal-ABS), wobei lediglich der Vorderradbremskreis gezeigt ist, während der ungeregelte Hinterradbremskreis nicht dargestellt ist, nachdem er sich nicht von herkömmlichen Hinterradbremskreisen unterscheidet, und

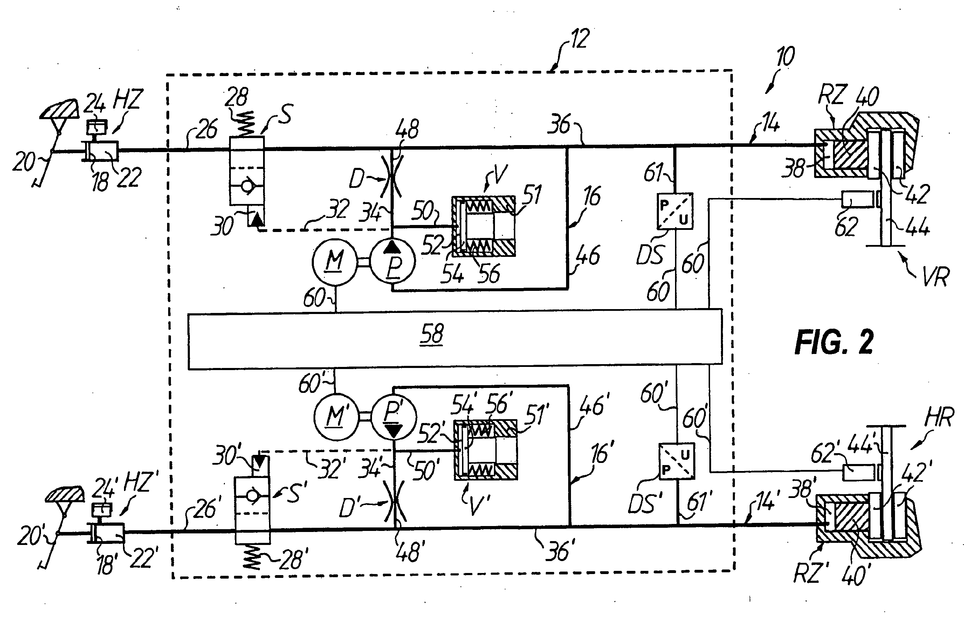

- Fig. 2: ein Schaltbild einer blockiergeschützten, hydraulischen Bremsanlage für ein motorisiertes Zweirad nach einem zweiten Ausführungsbeispiel der Erfindung (2-Kanal-ABS), wobei die Vorderrad- und Hinterradbremskreise gezeigt sind.

Der besseren Übersichtlichkeit halber sind in den Figuren lediglich die erfindungs- und funktionsrelevanten Elemente der jeweiligen Bremsanlage dargestellt.

### DETAILLIERTE BESCHREIBUNG DER AUSFÜHRUNGSBEISPIELE

In Fig. 1 ist eine blockiergeschützte, hydraulische Bremsanlage für ein motorisiertes Zweirad allgemein mit 10 beziffert, von der nur der auf das Vorderrad VR wirkende Anlagenteil dargestellt ist. Dieser besitzt einen Hauptbremszylinder HZ und einen Radbremszylinder RZ sowie einen dazwischen geschalteten, allgemein mit 12 bezifferten Druckmodulator. Hydraulisch gesehen kann der auf das Vorderrad VR wirkende Anlagenteil der Bremsanlage 10 unterteilt werden in einen Radbremskreis 14, der den Hauptbremszylinder HZ, den Radbremszylinder RZ und ein dazwischen geschaltetes Schaltventil S aufweist, und einen Hilfsdruckkreis 16, welcher zwischen dem Schaltventil S und dem Radbremszylinder RZ an dem Radbremskreis 14 parallel angeschlossen ist. Der Hilfsdruckkreis 16 umfaßt allgemein eine Hydraulikpumpe P zur Erzeugung eines Volumenstroms, eine bezüglich der Hydraulikpumpe P stromabwärts gelegene Drosseleinrichtung D sowie eine Volumenausgleichseinrichtung V. Wie nachfolgend noch näher erläutert werden wird, ist das Schaltventil S für eine bremsschlupfgeregelte Betriebsphase der Bremsanlage 10 (ABS-Regelungsfall) von einer Grundstellung, in der es den Hauptbremszylinder HZ und den Radbremszylinder RZ hydraulisch verbindet, in eine Schaltstellung schaltbar, in welcher es am Radbremszylinder RZ einen Bremsdruckaufbau über den Hauptbremszylinder HZ verhindert, während der Bremsdruck am Radbremszylinder RZ vermittels des Hilfsdruckkreises 16 modulierbar ist. Wesentlich ist hierbei, wie im folgenden ebenfalls noch detailliert beschrieben werden wird, daß die Volumenausgleichseinrichtung V zwischen der Hydraulikpumpe P und der Drosseleinrichtung D an dem Hilfsdruckkreis 16 angeschlossen ist, wobei der durch die Hydraulikpumpe P erzeugte Volumenstrom veränderbar ist, um dem Radbremskreis 14 in definierter Weise Hydraulikflüssigkeit zu entziehen.

Zur hydraulischen Ansteuerung des auf das Vorderrad VR wirkenden Anlagenteils der Bremsanlage 10 dient der einkammerige Hauptbremszylinder HZ, dessen Kolben 18 mittels eines Betätigungselements 20 -- hier schematisch als Pedal dargestellt, üblicherweise jedoch als Handhebel ausgebildet -- verschiebbar ist, um einen Bremsdruck in einer Druckkammer 22 zu erzeugen, die im gezeigten, unbetätigten Zustand des Hauptbremszylinders HZ mit einem Ausgleichsbehälter 24 verbunden ist. Der Druckanschluß der Druckkammer 22 ist über eine Druckleitung 26 an einen Druckanschluß des Schaltventils S angeschlossen.

Bei dem Schaltventil S handelt es sich um ein mittels einer Ventilfeder 28 in eine Durchfluß-Nullstellung vorgespanntes, über einen Steueranschluß 30 hydraulisch ansteuerbares 2/2-Wege-Ventil, das in seiner Schaltstellung als Rückschlagventil wirkt, welches einerseits am Radbremszylinder RZ einen Bremsdruckabbau über den Hauptbremszylinder HZ gestattet, andererseits aber vom Hauptbremszylinder HZ kommend in Richtung des Radbremszylinders RZ sperrt. Das Schaltventil S ist in Abhängigkeit von dem zwischen der Hydraulikpumpe P und der Drosseleinrichtung D im Hilfsdruckkreis 16 herrschenden Druck von seiner Grund- oder Nullstellung in seine Schaltstellung schaltbar, wozu der Steueranschluß 30 mittels einer Steuerleitung 32 an den entsprechenden Staudruckabschnitt 34 des Hilfsdruckkreises 16 angeschlossen ist. Die Ventilfeder 28 ist hierbei so ausgelegt, daß das Schaltventil S erst bei am Steueranschluß 30 anstehendem "Blockierdruck" von seiner Grund- oder Nullstellung in seine Schaltstellung schaltet. Bei diesem Blockierdruck handelt es sich um einen vorbestimmten, d.h. konstruktiv festgelegten Druck, bei dem, wenn dieser Druck dem Radbremszylinder RZ angelegt würde, das gebremste Rad, hier das Vorderrad VR, unter schlechtesten Bedingungen (maximale Beladung des Fahrzeugs) bei hohen Kraftschlußbeiwerten (*high µ*) blockieren würde.

Der Arbeitsanschluß des Schaltventils S ist über eine Druckleitung 36 mit dem Druckanschluß des Radbremszylinders RZ hydraulisch verbunden. Der im dargestellten Ausführungsbeispiel in einem Bremssattel, genauer einem Schwimmsattel einer Scheibenbremse integrierte Radbremszylinder RZ hat eine Druckkammer 38, die von einem im Schwimmsattel längsverschieblich geführten Kolben 40 hydraulisch dicht begrenzt wird. Ferner ist der Schwimmsattel mit Bremsbelägen 42 versehen, die in an sich bekannter Weise bei Druckbeaufschlagung der Druckkammer 38 über den Kolben 40 gegen eine Bremsscheibe 44 gepreßt werden.

Parallel zu der Druckleitung 36 ist der Hilfsdruckkreis 16 geschaltet, in dem die Hydraulikpumpe P, die Volumenausgleichseinrichtung V und die Drosseleinrichtung D in dieser Reihenfolge in Reihenschaltung hintereinander angeordnet sind. Genauer gesagt zweigt ein Saugabschnitt 46 des Hilfsdruckkreises 16 von der Druckleitung 36 ab und ist an die Saugseite der Hydraulikpumpe P angeschlossen. Die Druckseite der Hydraulikpumpe P ist über den Staudruckabschnitt 34 des Hilfsdruckkreises 16 mit dem Eingang der Drosseleinrichtung D verbunden, bei der es sich bevorzugt um eine Festblende handelt und deren Ausgang wiederum über einen Verbindungsabschnitt 48 des Hilfsdruckkreises 16 an die Druckleitung 36 angeschlossen ist.

Die Hydraulikpumpe P, bei der es sich vorzugsweise um eine Rollenzellenpumpe handelt, ist mittels eines Elektromotors M antreibbar, bei dem es sich bevorzugt um einen bürstenlosen Gleichstrommotor handelt. Zur Steuerung der Förderleistung der Hydraulikpumpe P, d.h. zum Verändern des von der Hydraulikpumpe P erzeugten Volumenstroms ist die Drehzahl des Elektromotors M steuerbar.

Die Volumenausgleichseinrichtung V ist über eine Ausgleichsleitung 50 an den Staudruckabschnitt 34 des Hilfsdruckkreises 16 angeschlossen. Bei der Volumenausgleichseinrichtung V handelt es sich im dargestellten Ausführungsbeispiel um einen Federdruckspeicher, mit einem hinterlüfteten Gehäuse 51, einer darin vorgesehenen Ausgleichskammer 52, die mit der Ausgleichsleitung 50 hydraulisch verbunden ist, einem im Gehäuse 51 längsverschieblich geführten Kolben 54, der die Ausgleichskammer 52 hydraulisch dicht begrenzt, und einer im Gehäuse 51 angeordneten Druckfeder 56, die den Kolben 54 in Richtung der Ausgleichskammer 52 vorspannt. Die Druckfeder 56 ist hierbei so ausgelegt, daß sich der Kolben 54 erst dann in Fig. 1 nach rechts bewegt und die Volumenausgleichseinrichtung V somit "anspricht" und Hydraulikflüssigkeit aufnimmt, wenn an der Volumenausgleichseinrichtung V über die Ausgleichsleitung 50 der weiter oben definierte Blockierdruck ansteht.

In Fig. 1 mit 58 beziffert ist des weiteren eine Regelelektronik. An die Regelelektronik 58 über allgemein mit 60 bezifferte elektrische Leitungen angeschlossen sind der Elektromotor M zum Antreiben der Hydraulikpumpe P, ein Drucksensor DS, mittels dessen über eine hydraulische Signalleitung 61 der Bremsdruck in der Druckleitung 36 erfaßt werden kann, und ein Geschwindigkeits- bzw. Drehzahlsensor 62 zum Erfassen der Drehzahl des entsprechenden Rades, hier des Vorderrades VR.

Zum strukturellen Aufbau der Bremsanlage 10 ist in Fig. 1 schließlich noch durch die gestrichelt eingezeichnete Systemgrenze des Druckmodulators 12 angedeutet, daß sämtliche vorbeschriebenen Bauelemente bis auf den Hauptbremszylinder HZ, den Radbremszylinder RZ und den Drehzahlsensor 62 zu einem Block zusammengefaßt werden können, so daß der derart ausgebildete Druckmodulator 12 als vormontiertes, funktionsgeprüftes und ggf. mit Hydraulikflüssigkeit vorbefülltes Aggregat für eine unkomplizierte Montage beim Kraftfahrzeug-Hersteller bereitgestellt werden kann. In einem solchen (Gehäuse)Block können die vorbeschriebenen Hydraulikleitungen natürlich auch als Hydraulikkanäle ausgebildet werden, welche die ggf. an den (Gehäuse) Block angeflanschten Hydraulikkomponenten (Schaltventil S, Hydraulikpumpe P, Volumenausgleichseinrichtung V, Drosseleinrichtung D) wie beschrieben miteinander verbinden.

Die vorbeschriebene hydraulische Bremsanlage 10 arbeitet wie folgt. Im normalen Bremsbetrieb, d.h. wenn kein ABS-Regelungsfall vorliegt, befindet sich das Schaltventil S in seiner in Fig. 1 gezeigten Durchfluß-Nullstellung. Wird nun der Hauptbremszylinder HZ über das Betätigungselement 20 betätigt, wird infolge der Verschiebung des Kolbens 18 die Verbindung zwischen der Druckkammer 22 und dem Ausgleichsbehälter 24 unterbrochen und in der Druckkammer 22 baut sich ein Druck auf. Dieser Druck liegt über die Druckleitung 26, das geöffnete Schaltventil S sowie die Druckleitung 36 in der Druckkammer 38 des Radbremszylinders RZ an und bewirkt dort eine Verschiebung des Kolbens 40, infolge der das Vorderrad VR in an sich bekannter Weise vermittels der Bremsbeläge 42 und der Bremsscheibe 44 abgebremst wird. Wird das Betätigungselement 20 zum Beenden der Bremsung entlastet, baut sich der Bremsdruck am Radbremszylinder RZ in gleicher Weise über die Druckleitung 36, das geöffnete Schaltventil S und die Druckleitung 26 zum Hauptbremszylinder HZ hin wieder ab.

In einem ABS-Regelungsfall, der im Verlauf einer wie oben beschrieben eingeleiteten Bremsung vermittels der Regelelektronik 58 auf an sich bekannte Weise erkannt wird, wenn die Auswertung des Signals des Drehzahlsensors 62 ergibt, daß das Vorderrad VR überbremst, d.h. am Vorderrad VR eine vorbestimmte Verzögerungsschwelle überschritten wird, schaltet die Regelelektronik 58 den Elektromotor M mit einer im Verhältnis hohen Drehzahl an, so daß die Hydraulikpumpe P beginnt, Hydraulikflüssigkeit mit einer relativ hohen Förderleistung aus dem Saugabschnitt 46 des Hilfsdruckkreises 16 herauszufördern. Dabei entsteht vor der Drosseleinrichtung D im Staudruckabschnitt 34 des Hilfsdruckkreises 16 ein Staudruck, der sowohl über die Ausgleichsleitung 50 in der Ausgleichskammer 52 der Volumenausgleichseinrichtung V als auch über die Steuerleitung 32 am Steueranschluß 30 des Schaltventils S anliegt.

Mit Erreichen des oben bereits erwähnten Blockierdrucks im Staudruckabschnitt 34 des Hilfsdruckkreises 16 schaltet das Schaltventil S gegen die Kraft der Ventilfeder 28 von seiner Grund- oder Nullstellung in seine Schaltstellung, so daß eine weitere Erhöhung des Bremsdrucks in der Druckleitung 36 über den Hauptbremszylinder HZ nicht mehr möglich ist. Aufgrund der Rückschlagventilfunktion des Schaltventils S in dessen Schaltstellung ist es für den Fahrer des motorisierten Zweirads jedoch möglich, den Bremsdruck in der Druckleitung 36 durch Entlastung des Betätigungselements 20 willentlich abzubauen.

Zugleich wird in der Ausgleichskammer 52 der Ansprechdruck der Volumenausgleichseinrichtung V erreicht, worauf der Kolben 54 im Gehäuse 51 gegen die Kraft der Druckfeder 56 in Fig. 1 nach rechts verschoben wird und die Volumenausgleichseinrichtung V Hydraulikflüssigkeit aufnimmt. Infolge dieses vermittels der Hydraulikpumpe P über den Saugabschnitt 46 des Hilfsdruckkreises 16 bewirkten Entzugs von Hydraulikflüssigkeit aus der Druckleitung 36 heraus in die Volumenausgleichseinrichtung V hinein und aufgrund des Umstands, daß über die Drosseleinrichtung D und den Verbindungsabschnitt 48 des Hilfsdruckkreises 16 nicht im gleichen Umfang Hydraulikflüssigkeit in die Druckleitung 36 nachfließen kann, kommt es zu einem Bremsdruckabbau am Radbremszylinder RZ. Im Ergebnis dreht das Vorderrad VR wieder schneller.

Ergibt die Auswertung des Signals des Drehzahlsensors 62 durch die Regelelektronik 58 nun, daß eine zweite Verzögerungsschwelle am Vorderrad VR unterschritten wird, reduziert die Regelelektronik 58 die Drehzahl des Elektromotors M, worauf die Förderleistung der Hydraulikpumpe P sinkt. Hierdurch sinkt auch der Staudruck vor der Drosseleinrichtung D im Staudruckabschnitt 34 des Hilfsdruckkreises 16, worauf der Kolben 54 der Volumenausgleichseinrichtung V aufgrund der Kraft der Druckfeder 56 in Fig. 1 nach links verschoben wird und somit Hydraulikflüssigkeit aus der Volumenausgleichseinrichtung V herausschiebt. Die über die Ausgleichsleitung 50 in den Staudruckabschnitt 34 des Hilfsdruckkreises 16 wieder zurückgeführte Hydraulikflüssigkeit gelangt über die Drosseleinrichtung D und den Verbindungsabschnitt 48 des Hilfsdruckkreises 16 wieder in die Druckleitung 36. Infolge dessen steigt der Bremsdruck am Radbremszylinder RZ wieder an, und zwar solange bis die erste Verzögerungsschwelle am Vorderrad VR abermals überschritten wird, worauf der oben beschriebene Vorgang zum Druckabbau am Radbremszylinder RZ sich wiederholt.

Es ist ersichtlich, daß durch schnelles Drehen des Elektromotors M mit einer im Verhältnis hohen Förderleistung der Hydraulikpumpe P dem Radbremskreis 14 ein größeres Hydraulikflüssigkeitsvolumen entzogen werden kann, was zu einem stärkeren Druckabbau am Radbremszylinder RZ führt, während durch langsameres Drehen des Elektromotors M mit einer im Verhältnis geringen Förderleistung der Hydraulikpumpe P dem Radbremskreis 14 ein kleineres Hydraulikflüssigkeitsvolumen entzogen werden kann, was zu einem schwächeren Druckabbau am Radbremszylinder RZ führt. Für einen Druckaufbau am Radbremszylinder RZ ist durch geeignete Drehzahlsteuerung des Elektromotors M die Förderleistung der Hydraulikpumpe P nur soweit zu reduzieren, daß im Staudruckabschnitt 34 des Hilfsdruckkreises 16 der Staudruck soweit sinkt, daß die Volumenausgleichseinrichtung V das dem Radbremskreis 14 entzogene Hydraulikflüssigkeitsvolumen wenigstens teilweise wieder abgibt, welches sodann zeitverzögert über die Drosseleinrichtung D in den Radbremskreis 14 zurückgelangt. Im Ergebnis kann durch entsprechende Ansteuerung des Elektromotors M und damit der Hydraulikpumpe P im Zusammenwirken mit der Drosseleinrichtung D und der Volumenausgleichseinrichtung V der hydraulische Druck im Radbremskreis 14 wie beschrieben definiert abgebaut, gehalten bzw. aufgebaut werden. Der eigentliche ABS-Regelalgorithmus, der vorbestimmte Druckaufbau-, Druckhalte- und Druckabbauphasen umfaßt, unterscheidet sich nicht von herkömmlichen ABS-Regelalgorithmen und soll deshalb an dieser Stelle nicht näher beschrieben werden.

Droht ein Blockieren des Vorderrades VR nicht mehr, wird zum Ende des ABS-Regelungsvorgangs vermittels der Regelelektronik 58 die Drehzahl des Elektromotors M deutlich heruntergefahren, wodurch die Förderleistung der Hydraulikpumpe P und damit der Staudruck vor der Drosseleinrichtung D im Staudruckabschnitt 34 des Hilfsdruckkreises 16 erheblich sinkt. Infolge dessen wird das von der Volumenausgleichseinrichtung V aufgenommene Hydraulikflüssigkeitsvolumen vermittels des von der Druckfeder 56 kraftbeaufschlagten Kolbens 54 gänzlich in den Staudruckabschnitt 34 des Hilfsdruckkreises 16 zurückgeschoben und gelangt über die Drosseleinrichtung D und den Verbindungsabschnitt 48 des Hilfsdruckkreises 16 zurück in den Radbremskreis 14. Dabei baut sich der Staudruck im Staudruckabschnitt 34 des Hilfsdruckkreises 16 über die Drosseleinrichtung D soweit ab, daß im Staudruckabschnitt 34 der Blockierdruck wieder unterschritten wird. Dann wird schließlich das Schaltventil S aufgrund der Kraft der Ventilfeder 28 wieder von seiner Schaltstellung in die Grund- oder Nullstellung geschaltet, worauf die Regelelektronik 58 den während der ABS-Regelung kontinuierlich, wenngleich mit sich verändernden Drehzahlen laufenden Elektromotor M und somit die Hydraulikpumpe P abstellt.

Bliebe noch zu erwähnen, daß der Drucksensor DS im ABS-Regelungsfall insbesondere dazu dient, zu verhindern, daß vermittels der Hydraulikpumpe P des Hilfsdruckkreises 16 am Radbremszylinder RZ ein Unterdruck erzeugt wird.

Die Fig. 2 zeigt ein zweites Ausführungsbeispiel, welches veranschaulicht, wie mit der vorbeschriebenen hydraulischen Schaltung ein 2-Kanal-ABS aufgebaut werden kann, wobei verglichen zum 1-Kanal-ABS gemäß Fig. 1 gleiche oder entsprechende Bauteile mit den gleichen Bezugszeichen gekennzeichnet sind, im Falle des Radbremskreises 14' und des Hilfsdruckkreises 16' für das Hinterrad HR noch mit einem zusätzlichen Strich (') versehen. Die Bremsvorgänge an Vorderrad VR und Hinterrad HR, insbesondere im ABS-Regelungsfall, unterscheiden sich im Prinzip nicht von der oben zum 1-Kanal-ABS beschriebenen Funktionsweise, so daß sie an dieser Stelle nicht weiter beschrieben werden müssen. Erwähnt werden soll hier lediglich noch, daß vermittels der gemeinsamen Regelelektronik 58 für die Bremsen an Vorderrad VR und Hinterrad HR grundsätzlich auch eine bestimmte Bremskraftverteilung auf Vorderrad VR und Hinterrad HR vorgegeben werden kann, wenn sich beide Bremsen in der ABS-Regelung befinden.

Es wird eine blockiergeschützte, hydraulische Bremsanlage offenbart, mit einem Radbremskreis, umfassend einen Hauptbremszylinder, einen Radbremszylinder und ein Schaltventil, und einem zwischen dem Schaltventil und Radbremszylinder an dem Radbremskreis parallel angeschlossenen Hilfsdruckkreis, umfassend eine Hydraulikpumpe, eine hiervon stromabwärts gelegene Drosseleinrichtung sowie eine Volumenausgleichseinrichtung. Dabei ist das Schaltventil im ABS-Regelungsfall von einer Grundstellung, in der es den Hauptbremszylinder und Radbremszylinder hydraulisch verbindet, in eine Schaltstellung schaltbar, in welcher es am Radbremszylinder einen Bremsdruckaufbau über den Hauptbremszylinder verhindert, während der Bremsdruck am Radbremszylinder durch den Hilfsdruckkreis modulierbar ist. Die Volumenausgleichseinrichtung ist zwischen der Hydraulikpumpe und Drosseleinrichtung an dem Hilfsdruckkreis angeschlossen, wobei der durch die Hydraulikpumpe erzeugte Volumenstrom veränderbar ist, um dem Radbremskreis definiert Hydraulikflüssigkeit zu entziehen. Im Ergebnis wird eine verglichen zum Stand der Technik einfacher und kostengünstiger ausgebildete Bremsanlage geschaffen, die im ABS-Regelungsfall frei von störenden Rückwirkungen auf den Hauptbremszylinder ist.

### BEZUGSZEICHENLISTE

- 10: Bremsanlage
- 12: Druckmodulator
- 14, 14': Radbremskreis
- 16, 16': Hilfsdruckkreis
- 18, 18': Kolben
- 20, 20': Betätigungselement
- 22, 22': Druckkammer
- 24, 24': Ausgleichsbehälter
- 26, 26': Druckleitung
- 28, 28': Ventilfeder
- 30, 30': Steueranschluß
- 32, 32': Steuerleitung
- 34, 34': Staudruckabschnitt
- 36, 36': Druckleitung
- 38, 38': Druckkammer
- 40, 40': Kolben
- 42, 42': Bremsbelag
- 44, 44': Bremsscheibe
- 46, 46': Saugabschnitt
- 48, 48': Verbindungsabschnitt
- 50, 50': Ausgleichsleitung
- 51, 51': Gehäuse
- 52, 52': Ausgleichskammer
- 54, 54': Kolben
- 56, 56': Druckfeder
- 58: Regelelektronik
- 60, 60': elektrische Leitung
- 61, 61': hydraulische Signalleitung
- 62, 62': Drehzahlsensor

- D, D': Drosseleinrichtung
- DS, DS': Drucksensor
- HR: Hinterrad
- HZ, HZ': Hauptbremszylinder
- M, M': Elektromotor
- P, P': Hydraulikpumpe
- RZ, RZ': Radbremszylinder
- S, S': Schaltventil
- V, V': Volumenausgleichseinrichtung
- VR: Vorderrad

## Patentansprüche

1. Blockiergeschützte, hydraulische Bremsanlage (10), insbesondere für motorisierte Zweiräder, mit
einem Radbremskreis (14), der einen Hauptbremszylinder (HZ), mindestens einen Radbremszylinder (RZ) und ein Schaltventil (S) aufweist, und
einem zwischen dem Schaltventil (S) und dem Radbremszylinder (RZ) an dem Radbremskreis (14) parallel angeschlossenen Hilfsdruckkreis (16), der eine Hydraulikpumpe (P) zur Erzeugung eines Volumenstroms, eine bezüglich der Hydraulikpumpe (P) stromabwärts gelegene Drosseleinrichtung (D) sowie eine Volumenausgleichseinrichtung (V) umfasst,
wobei das Schaltventil (S) für eine bremsschlupfgeregelte Betriebsphase der Bremsanlage (10) von einer Grundstellung, in der es den Hauptbremszylinder (HZ) und den Radbremszylinder (RZ) hydraulisch verbindet, in eine Schaltstellung schaltbar ist, in welcher es am Radbremszylinder (RZ) einen Bremsdruckaufbau über den Hauptbremszylinder (HZ) verhindert, während der Bremsdruck am Radbremszylinder (RZ) vermittels des Hilfsdruckkreises (16) modulierbar ist,
**dadurch gekennzeichnet, dass** die Volumenausgleichseinrichtung (V) zwischen der Hydraulikpumpe (P) und der Drosseleinrichtung (D) an dem Hilfsdruckkreis (16) angeschlossen ist,
wobei der durch die Hydraulikpumpe (P) erzeugte Volumenstrom veränderbar ist, so dass durch definierte Änderung der Förderleistung der in der bremsschlupfgeregelten Betriebsphase kontinuierlich betriebenen Hydraulikpumpe (P) dem Radbremskreis (14) in definierter Weise Hydraulikflüssigkeit entziehbar und somit der Bremsdruck in der bremsschlupfgeregelten Betriebsphase gänzlich ohne elektromagnetisch betätigbare Schaltventile modulierbar ist.

2. Bremsanlage (10) nach Anspruch 1, **dadurch gekennzeichnet, dass** es sich bei der Volumenaufnahmeeinrichtung (V) um einen Federdruckspeicher handelt.

3. Bremsanlage (10) nach Anspruch 1 oder 2, **dadurch gekennzeichnet, dass** es sich bei der Drosseleinrichtung (D) um eine Festblende handelt.

4. Bremsanlage (10) nach einem der vorhergehenden Ansprüche, **dadurch gekennzeichnet, dass** die Hydraulikpumpe (P) mittels eines Elektromotors (M) antreibbar ist, dessen Drehzahl zur Veränderung des von der Hydraulikpumpe (P) erzeugten Volumenstroms steuerbar ist.

5. Bremsanlage (10) nach Anspruch 4, **dadurch gekennzeichnet, dass** es sich bei der Hydraulikpumpe (P) um eine Rollenzellenpumpe handelt.

6. Bremsanlage (10) nach Anspruch 4 oder 5, **dadurch gekennzeichnet, dass** es sich bei dem Elektromotor (M) um einen bürstenlosen Gleichstrommotor handelt.

7. Bremsanlage (10) nach einem der vorhergehenden Ansprüche, **dadurch gekennzeichnet, dass** das Schaltventil (S) in Abhängigkeit von dem zwischen der Hydraulikpumpe (P) und der Drosseleinrichtung (D) im Hilfsdruckkreis (16) herrschenden Druck von seiner Grundstellung in seine Schaltstellung schaltbar ist.

8. Bremsanlage (10) nach einem der vorhergehenden Ansprüche, **dadurch gekennzeichnet, dass** das Schaltventil (S) in seiner Schaltstellung als Rückschlagventil wirkt, welches am Radbremszylinder (RZ) einen Bremsdruckabbau über den Hauptbremszylinder (HZ) gestattet.

9. Bremsanlage (10) nach einem der vorhergehenden Ansprüche, **gekennzeichnet durch** einen Drucksensor (DS), mittels dessen der Bremsdruck im Radbremskreis (14) erfassbar ist.

10. Bremsanlage (10) nach einem der vorhergehenden Ansprüche, **dadurch gekennzeichnet, dass** zumindest das Schaltventil (S), die Hydraulikpumpe (P), die Drosseleinrichtung (D) und die Volumenausgleichseinrichtung (V) als Druckmodulator (12) zu einem Block zusammengefasst sind.

## Claims

1. Anti-lock hydraulic braking system (10), in particular for motorized two-wheel vehicles, comprising
a wheel brake circuit (14) which comprises a main brake cylinder (HZ), at least one wheel brake cylinder (RZ) and a switching valve (S), and
an auxiliary pressure circuit (16) which is connected in parallel between the switching valve (S) and the wheel brake cylinder (RZ) on the wheel brake circuit (14) and which comprises a hydraulic pump (P) for producing a volume flow, a throttle device (D) arranged downstream of the hydraulic pump (P), and also a volume equalization device (V),
wherein the switching valve (S), for a skid-controlled operating phase of the braking system (10), can be switched from a basic position, in which it hydraulically connects the main brake cylinder (HZ) and the wheel brake cylinder (RZ), to a switched position, in which it prevents a build-up of braking pressure on the wheel brake cylinder (RZ) via the main brake cylinder (HZ), while the braking pressure on the wheel brake cylinder (RZ) can be modulated by means of the auxiliary pressure circuit (16),
**characterized in that** the volume equalization device (V) is connected between the hydraulic pump (P) and the throttle device (D) on the auxiliary pressure circuit (16),
wherein the volume flow produced by the hydraulic pump (P) can be varied so that, by changing in a defined manner the conveying power of the hydraulic pump (P) which is operated continuously in the skid-controlled operating phase, hydraulic fluid can be withdrawn from the wheel brake circuit (14) in a defined manner and, thus, the brake pressure can be modulated in the skid-controlled operating phase entirely without any electromagnetically operated switching valves.

2. Braking system (10) according to claim 1, **characterized in that** the volume equalization device (V) is a spring pressure reservoir.

3. Braking system (10) according to claim 1 or 2, **characterized in that** the throttle device (D) is a fixed baffle.

4. Braking system (10) according to one of the preceding claims, **characterized in that** the hydraulic pump (P) can be driven by means of an electric motor (M), the rotational speed of which can be controlled in order to vary the volume flow produced by the hydraulic pump (P).

5. Braking system (10) according to claim 4, **characterized in that** the hydraulic pump (P) is a roller cell pump.

6. Braking system (10) according to claim 4 or 5, **characterized in that** the electric motor (M) is a brushless DC motor.

7. Braking system (10) according to one of the preceding claims, **characterized in that** the switching valve (S) can be switched from its basic position into its switched position as a function of the pressure prevailing between the hydraulic pump (P) and the throttle device (D) in the auxiliary pressure circuit (16).

8. Braking system (10) according to one of the preceding claims, **characterized in that** the switching valve (S) in its switched position acts as a non-return valve which allows a reduction in braking pressure on the wheel brake cylinder (RZ) via the main brake cylinder (HZ).

9. Braking system (10) according to one of the preceding claims, **characterized by** a pressure sensor (DS), by means of which the braking pressure in the wheel brake circuit (14) can be detected.

10. Braking system (10) according to one of the preceding claims, **characterized in that** at least the switching valve (S), the hydraulic pump (P), the throttle device (D) and the volume equalization device (V) are combined to form a block as pressure modulator (12).

## Revendications

1. Installation de freinage hydraulique (10), à système antiblocage, notamment pour deux-roues motorisés, comprenant,
un circuit de freinage de roue (14), qui présente un maître-cylindre de freinage (HZ), au moins un cylindre de frein de roue (RZ) et une vanne de commande (S), et
un circuit de pression auxiliaire (16), qui est raccordé en parallèle au circuit de freinage de roue (14), entre la vanne de commande (S) et le cylindre de frein de roue (RZ), et qui englobe une pompe hydraulique (P) destinée à produire un débit volumique, un dispositif d'étranglement (D) placé en aval relativement à la pompe hydraulique (P), ainsi qu'un dispositif de compensation de volume (V),
la vanne de commande (S) pouvant être commutée, pour une phase de fonctionnement à régulation du glissement de freinage ou à régulation antiblocage de l'installation de freinage (10), d'une position de base dans laquelle elle relie hydrauliquement le maître-cylindre de freinage (HZ) et le cylindre de frein de roue (RZ), à une position commutée dans laquelle elle empêche, au niveau du cylindre de frein de roue (RZ), l'établissement d'une pression de freinage par l'intermédiaire du maître-cylindre de freinage (HZ), tandis que la pression de freinage au niveau du cylindre de frein de roue (RZ) peut être modulée au moyen du circuit de pression auxiliaire (16),
**caractérisée en ce que** le dispositif de compensation de volume (V) est raccordé au circuit de pression auxiliaire (16), entre la pompe hydraulique (P) et le dispositif d'étranglement (D),
le débit volumique engendré par la pompe hydraulique (P) pouvant être modifié, de sorte que par une variation définie de la puissance de refoulement de la pompe hydraulique (P) fonctionnant en continu dans la phase de fonctionnement à régulation du glissement de freinage ou à régulation antiblocage, il est possible de soutirer, de manière définie, du fluide hydraulique au circuit de freinage de roue (14), en pouvant ainsi moduler la pression de freinage, lors de la phase de fonctionnement à régulation du glissement de freinage ou à régulation antiblocage, entièrement sans vannes de commande actionnables par voie électromagnétique.

2. Installation de freinage (10) selon la revendication 1, **caractérisée en ce qu'**il s'agit, concernant le dispositif de compensation de volume (V), d'un accumulateur de pression à ressort.

3. Installation de freinage (10) selon la revendication 1 ou la revendication 2, **caractérisée en ce qu'**il s'agit, concernant le dispositif d'étranglement (D), d'un diaphragme fixe.

4. Installation de freinage (10) selon l'une des revendications précédentes, **caractérisée en ce que** la pompe hydraulique (P) peut être entraînée par un moteur électrique (M), dont la vitesse de rotation peut être commandée pour faire varier le débit volumique engendrée par la pompe hydraulique (P).

5. Installation de freinage (10) selon la revendication 4, **caractérisée en ce qu'**il s'agit, concernant la pompe hydraulique (P), d'une pompe multicellulaire à rouleaux.

6. Installation de freinage (10) selon la revendication 4 ou la revendication 5, **caractérisée en ce qu'**il s'agit, concernant le moteur électrique (M), d'un moteur à courant continu sans balais.

7. Installation de freinage (10) selon l'une des revendications précédentes, **caractérisée en ce que** la vanne de commande (S) peut être commutée de sa position de base à sa position commutée, en fonction de la pression régnant dans le circuit de pression auxiliaire (16), entre la pompe hydraulique (P) et le dispositif d'étranglement (D)

8. Installation de freinage (10) selon l'une des revendications précédentes, **caractérisée en ce que** dans sa position commutée, la vanne de commande (S) agit en tant que clapet anti-retour, qui permet une dégradation de la pression de freinage au niveau du cylindre de frein de roue (RZ), par l'intermédiaire du maître-cylindre de freinage (HZ).

9. Installation de freinage (10) selon l'une des revendications précédentes, **caractérisée par** un capteur de pression (DS) au moyen duquel il est possible de relever la pression de freinage dans le circuit de freinage de roue (14).

10. Installation de freinage (10) selon l'une des revendications précédentes, **caractérisée en ce qu'**au moins la vanne de commande (S), la pompe hydraulique (P), le dispositif d'étranglement (D) et le dispositif de compensation de volume (V), sont regroupés en un bloc en tant que modulateur de pression (12).
